Europäisches Patentamt

European Patent Office

Office européen des brevets

(11) Veröffentlichungsnummer: **0 171 020**
**A1**

(12) **EUROPÄISCHE PATENTANMELDUNG**

(21) Anmeldenummer: **85109540.6**

(22) Anmeldetag: **29.07.85**

(51) Int. Cl.⁴: **C 03 B 11/02**

(30) Priorität: **06.08.84 DE 3428952**

(43) Veröffentlichungstag der Anmeldung: **12.02.86**
Patentblatt 86/7

(84) Benannte Vertragsstaaten: **AT DE FR GB IT**

(71) Anmelder: **Positron Gesellschaft für Anlagen zur Verformung thermoplastischer Massen m.b.H., Himbeergrund 27, D-8770 Lohr am Main (DE)**

(72) Erfinder: **Halbritter, Wilfried, Maria-Theresienstrasse 22, D-9770 Lohr am Main (DE)**

(74) Vertreter: **Zapfe, Hans, Dipl.-Ing., Seestrasse 2 Postfach 30 04 08, D-6054 Rodgau-3 (DE)**

(54) **Formmaschine für Pressglasteile.**

(57) Formmaschine für Pressglasteile, insbesondere für Kelche und Stiele. Ein drehbarer Maschinentisch (4) ist mit mehreren Arbeitsstationen (1) versehen, die je eine Bodenplatte (31) mit einer Zentriereinrichtung (37) für eine auswechselbar aufsetzbare Glasform (3) aufweisen. Jeder Arbeitsstation (1) ist ein Hubantrieb für einen mit der Glasform (3) zusammenwirkenden Pegel (25) zugeordnet. Der Hubantrieb ist mit einem im Maschinentisch (4) gelagerten ersten Vertikalführungselement (8) versehen. Der Pegel (25) ist mit einem zweiten, in der Bodenplatte (31) gelagerten Vertikalführungselement (20) versehen. Schliesslich ist eine Verstelleinrichtung für die Einstellung des vertikalen Abstandes zwischen Pegel (25) und Hubantrieb vorgesehen. Zur Lösung der Aufgabe, Bauhöhe und Gewicht der gesamten Vorrichtung zu verringern, wird erfindungsgemäss das erste Vertikalführungselement (8) auf seiner gesamten Länge unterhalb einer oberen Begrenzungsfläche (5) des Maschinentisches (4) in diesem angeordnet, und ferner ist die Bodenplatte (31) unmittelbar auf den Maschinentisch (4) aufgesetzt. Durch die erfindungsgemässe Lösung wird der bisher vorhandene Formentisch eingespart.

0 171 020

- 1 -

Firma
POSITRON Gesellschaft für Anlagen zur Verformung thermoplastischer Massen m.b.H.
Himbeergrund 27

D-8752 Glattbach

--------------------------------------------------------------

" Formmaschine für Preßglasteile "

--------------------------------------------------------------

Die Erfindung betrifft eine Formmaschine für Preßglasteile
mit einer Ansetzfläche für ein weiteres Glasteil, insbesondere für Kelche und Stiele, mit einem drehbaren Maschinentisch mit mehreren Arbeitsstationen mit je einer Bodenplatte mit mindestens einer Zentriereinrichtung für eine
auswechselbar aufsetzbare Glasform, mit je einem Hubantrieb für einen mit der Glasform zusammenwirkenden, die
Ansetzfläche formenden und nach dem Formvorgang geringfügig absenkbaren Pegel, mit einem ersten, zusammen
mit dem Hubantrieb im Maschinentisch gelagerten Vertikalführungselement für den Hubantrieb sowie mit einem
darüberliegenden zweiten, in der Bodenplatte gelagerten
Vertikalführungselement für den Pegel, sowie schließlich
mit einer Verstelleinrichtung für die Einstellung des
vertikalen Abstandes zwischen Pegel und Hubantrieb.

- 2 -

Bei dem vorstehend beschriebenen "Pegel" handelt es sich um ein einstellbares und außerdem definiert beweglíches Verschlußelement der Glasform, das beim Pressen von Kelchen und/oder Stielen den späteren Verbindungsstellen bzw. Ansatzflächen ihre geometrische Form aufprägt. Der Pegel muß hierbei vor dem Preßvorgang in seine Preßstellung angehoben und in einer ersten Phase nach dem Formvorgang der Ansetzfläche um ein geringes, aber definiertes Maß von der Ansetzfläche zurückgezogen werden, beispielsweise um 0,5 mm. Ist dieses Maß zu klein, dann entzieht der Pegel dem Glas zuviel Wärme, und es entstehen Risse in der Ansetzstelle. Ist dieses Maß zu groß, dann sackt das noch plastische Glas zu weit durch und bildet eine ungünstige Form der Ansetzfläche. Ideal ist eine geringfügige Berührung des nachfliessenden Glases ausschließlich mit dem Zentrum des Pegels (=ausreichende Abstützung bei vernachlässigbarer Wärmeabfuhr zum Pegel). Weiterhin ist es erforderlich, den Pegel gegenüber der Glasform so genau wie möglich zu zentrieren, um eine einwandfreie Verbindung der Glasteile zu erhalten.

Bei einer bekannten Formmaschine der eingangs beschriebenen Gattung sind die mehrfach und in einer Karussellanordnung vorhandenen Bodenplatten mit ihren Glasformen auf sogenannten Formentischen angeordnet, die fest mit dem drehbaren Maschinentisch verbunden sind und eine zweite Arbeitsebene definieren,

- 3 -

auf der auch die Schließantriebe für die Glasformen angeordnet sind. Die Formentische sind verhältnismäßig voluminöse und daher schwere Bauteile mit einer entsprechenden Ausladung am oberen Ende, auf der der Schließantrieb angeordnet ist. Wegen des hohen Gewichts der mehrfach vorhandenen Formentische muß der Maschinentisch entsprechend dimensioniert werden, so daß sich außer einer entsprechend großen Bauhöhe auch ein hohes Maschinengewicht ergibt. Hierbei kommt noch hinzu, daß die Hubantriebe im Maschinentisch und die Pegel in den einzelnen Formentischen angeordnet bzw. geführt sind, so daß die Antriebsbewegung durch Gestängeverbindungen übertragen werden muß. Das Antriebsgestänge ist erforderlich, obowhl das erste Vertikalführungselement und dessen im Maschinentisch befestigte Lagerbüchse bereits über die obere Begrenzungsfläche des Maschinentisches hinausragen.

Ein hohes Gewicht des Maschinentisches mit den darauf befestigten Formentischen ist aber insbesondere deswegen von Nachteil, weil der Preßvorgang quasikontinuierlich durchgeführt wird und infolgedessen der Maschinentisch schrittweise angetrieben werden muß. Wegen des hohen Gewichtes des Maschinentisches mit seinen Aufbauten läßt sich dabei wegen der erforderlichen Massenkräfte nur eine beschränkte Beschleunigung und Verzögerung in Umfangsrichtung durchführen, so daß die bekannte Vorrichtung nur eine begrenzte Anzahl von Arbeitstakten ausführen kann.

Durch das DE-GM 71 11 060 ist eine Glaspresse bekannt, mit der sowohl einteilige Preßgläser (z.B. Teller, Becher) als auch zweiteilige Preßgläser (z.B. Stielgläser) hergestellt werden können. Obwohl bei dieser Presse die Bodenplatten für die Preßform unmittelbar auf den Maschinentisch aufgesetzt sind, fehlt hierbei der Pegel, und es fehlen insbesondere Antriebseinrichtungen für einen abgestuften Antrieb (des Pegels), und es fehlen zweifache Führungen für die beweglichen Teile des Hubantriebs einerseits und des (nicht vorhandenen) Pegels andererseits. Soweit eine Variante der bekannten Presse für die Herstellung von Glastellern vorgesehen ist, wird der untere Abschluß der Glasform durch einen sogenannten Hebeboden bewirkt, der beim Preßvorgang auf der Bodenplatte aufsitzt und zum Ausheben des Tellers um ein beträchtliches Maß angehoben werden kann. Ein Absenken des Hebebodens ist nicht vorgesehen und wegen der Bodenplatte auch nicht möglich, so daß der Hebeboden mit dem Teller in Berührung bleibt und eine erhebliche Wärmesenke darstellt. Die Zentrierung zwischen Hebeboden und Glasform ist wegen der erforderlichen Wärmedehnungstoleranzen ungenau und für einen Pegel nicht geeignet. Soweit eine weitere Variante der bekannten Presse für das Zusammensetzen von Stielgläsern vorgesehen ist, sind Stiel und Kelch bereits vorgefertigt, und es handelt sich lediglich noch darum, den Kelch mittels einer hebbaren Auflageplatte, die weder einen Pegel darstellt noch im Maschinentisch geführt ist, an die Ansetzfläche des Stieles anzupressen. Die Antriebs- bzw. Hubvorrichtungen sollen dabei stationär unterhalb

- 5 -

des Maschinentisches angeordnet sein, so daß eine Führung der beweglichen Teile im Maschinentisch nicht möglich ist.

Der Erfindung liegt daher die Aufgabe zugrunde, eine Formmaschine der eingangs beschriebenen Gattung dahingehend zu verbessern, daß die Zahl der Teile und das Gewicht merklich verringert und die Taktzahl pro Zeiteinheit deutlich erhöht werden kann.

Die Lösung der gestellten Aufgabe erfolgt bei der eingangs angegebenen Formmaschine erfindungsgemäß dadurch, daß das erste Vertikalführungselement auf seiner ganzen Länge unterhalb einer oberen Begrenzungsfläche des Maschinentisches in diesem angeordnet ist und daß die Bodenplatte mit dem zweiten Vertikalführungselement unmittelbar auf den Maschinentisch aufgesetzt ist.

Durch die erfindungsgemäßen Merkmale geraten sämtliche Formentische mit ihrem hohen Gewicht und den erforderlichen Befestigungsmitteln in Fortfall. Die Glasformen mit dem Formenhalter können dadurch in einer wesentlich geringeren Höhe auf dem Maschinentisch unmittelbar befestigt werden, und wegen der geringeren Zahl und des geringeren Gewichts der auf dem Formentisch nunmehr unmittelbar befestigten Bauteile kann der Maschinentisch merklich schwächer dimensioniert werden, wodurch sich das Gesamtgewicht der Maschine nochmals deutlich verringert. Durch den Wegfall zahlreicher Teile verringern sich die Umrüst- und Demontagezeiten, und auch die Störanfälligkeit wird

- 6 -

geringer. Durch die geringere Bauhöhe der gesamten Vorrichtung lassen sich die Glasformen in einer für die Zugänglichkeit günstigeren Höhe anbringen; es ist aber auch möglich, den dadurch gewonnenen Raum durch eine größere Formenhöhe auszunutzen, d.h. die Formmaschine ist im Hinblick auf Gläser größerer Höhe universeller einsetzbar. Durch das geringere Trägheitsmoment der rotierenden Teile lassen sich Beschleunigung und Verzögerung erhöhen und eine höhere Taktzahl erreichen. Auch die Herstellkosten einer derartigen Vorrichtung können deutlich gesenkt werden.

Dabei lag die Befestigung der Glasformen und der Formenhalter unmittelbar auf dem Maschinentisch keineswegs auf der Hand, weil nämlich wegen der Länge des Übertragungsgestänges vom Hubantrieb bis zum Pegel und der Notwendigkeit einer Längeneinstellung des Übertragungsgestänges entsprechend lange Vertikalführungen vorgesehen werden mußten, die nach oben aus dem Formentisch herausragten und das unmittelbare Aufsetzen der Bodenplatte mit der Glasform verhinderten.

Es ist dabei gemäß der weiteren Erfindung besonders vorteilhaft, wenn das erste und das zweite Vertikalführungselement unter Zwischenschaltung einer gegenüber dem ersten Vertikalführungselement unverdrehbaren Gewindebuchse im Bereich des Maschinentisches aufeinander gesetzt sind, und wenn ein mit dem Pegel drehfest verbundener aber gegenüber dem zweiten Vertikalführungselement in einem weiteren Gewinde drehbarer Gewindezapfen in die Gewindebuchse eingreift, und zwar derart, daß das zweite Vertikalführungselement die Kontermutter für die Gewindebuchse ist.

Auf die vorstehend angegebene Weise werden die beiden nach Art von Kolben ausgebildeten Vertikalführungselemente praktisch unmittelbar übereinander angeordnet, d.h. sie sind nur durch einen Rand der Gewindebuchse voneinander getrennt. Durch den Wegfall eines besonderen Übertragungsgestänges können auch die beiden Vertikalführungselemente entsprechend kurz gehalten werden, wobei es möglich ist, die beiden Vertikalführungselemente nunmehr innerhalb einer Bau-

- 8 -

höhe unterzubringen, die bei der bekannten Lösung allein für das erste bzw. untere Vertikalführungselement benötigt wurde. Durch die drehfeste Verbindung der Gewindebuchse mit dem ersten (unteren) Vertikalführungselement ist es nicht mehr nötig, diese Gewindebüchse, die von außen nicht mehr ohne weiteres zugänglich ist, mit einem Werkzeug festzuhalten, während der Gewindezapfen des Pegels und/oder das zweite (obere) Vertikalführungselement gegenüber dem ersten (unteren) Vertikalführungselement bzw. gegenüber der Gewindebuchse zum Zwecke einer Verstellung des Pegels bzw. des Konterns verdreht werden.

Um dabei jedes der beiden Vertikalführungselemente unabhängig voneinander voll zum Tragen bringen zu können, wird gemäß der weiteren Erfindung die Gewindebuchse mit Radialspiel in das erste Führungselement eingesetzt.

Weitere vorteilhafte Ausgestaltungen des Erfindungsgegenstandes ergeben sich aus den übrigen Unteransprüchen.

Zwei Ausführungsbeispiele des Erfindungsgegenstandes und ihre Einzelheiten werden nachfolgend anhand der Figuren 1 bis 6 näher erläutert.

Es zeigen:

Figur 1     einen Vertikalschnitt durch eine Arbeitsstation für die Herstellung von Stielen,

Figur 2   einen Vertikalschnitt durch eine Arbeitsstation für die Herstellung von Kelchen,

Figur 3   einen Vertikalschnitt durch eine Bodenplatte mit einer aufgesetzten Glasform
analog Figur 2,

Figur 4   eine Draufsicht auf den Gegenstand von
Figur 3,

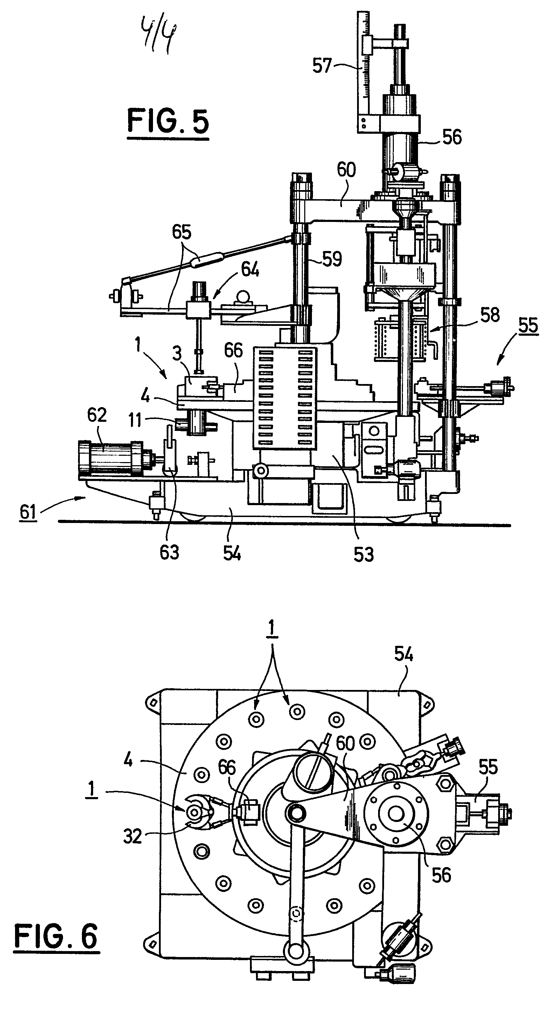

Figur 5   eine Seitenansicht einer vollständigen
Glasformmaschine gemäß der Erfindung,
und

Figur 6   eine Draufsicht auf wesentliche Teile der
Glasformmaschine nach Figur 5.

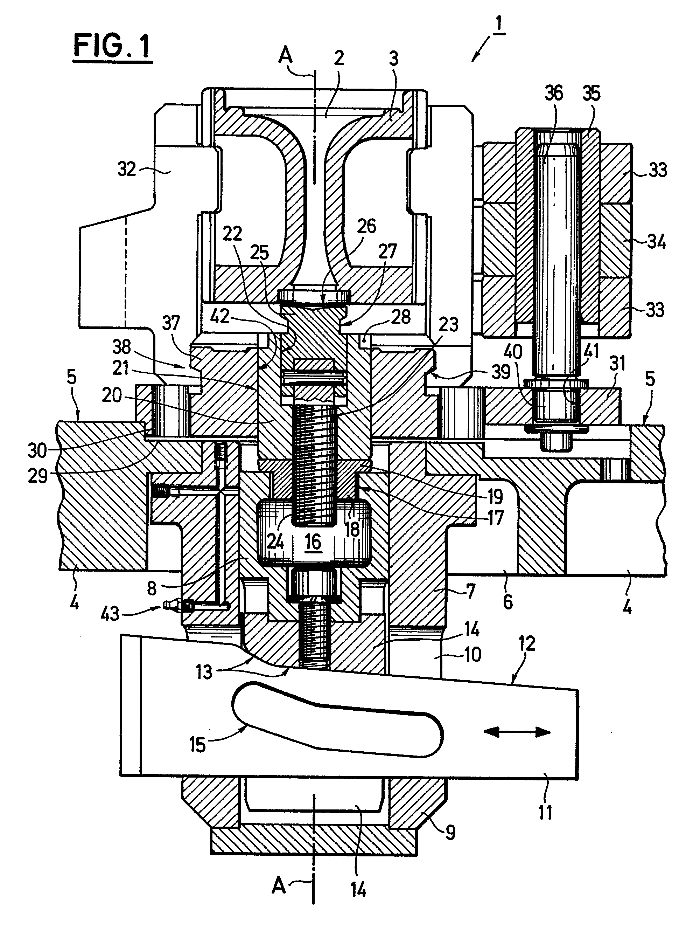

In Figur 1 ist eine Arbeitsstation 1 für die Herstellung
eines zunächst auf dem Kopf stehenden Glasstieles dargestellt, dessen Umriß dem Hohlraum 2 in einer Glasform 3 entspricht. Die Arbeitsstation 1 erstreckt sich
über einen Teilumfang eines Maschinentisches 4, der
nach Art eines Karussells ausgebildet ist und eine
obere Begrenzungsfläche 5 aufweist, die im wesentlichen
eine Kreisringfläche ist.

- 10 -

Die Unterseite des Maschinentisches 4 ist mit einer der Zahl der Arbeitsstationen entsprechenden Anzahl von Ausnehmungen 6 versehen, in denen je eine Lagerbüchse 7 für ein erstes kolbenförmiges Vertikalführungselement 8 angeordnet ist. Die Lagerbüchse 7 besitzt einen nach unten gerichteten Fortsatz 9 mit einer diametralen Öffnung 10, durch die ein Schiebekeil 11 mit einer Steuerfläche 12 hindurchgeführt ist. Die Steuerfläche 12 wirkt auf eine Steuerfläche 13 eines am unteren Ende gabelförmig ausgebildeten Kulissensteins 14 ein, der über eine nicht näher bezeichnete Schraube verdrehfest mit dem ersten Vertikalführungselement 8 verbunden ist. Durch eine Querbewegung des Schiebekeils 11 läßt sich eine der Steuerfläche 12 entsprechende Vertikalbewegung des Vertikalführungselements 8 erzeugen. Die (bekannten) Antriebsmittel für den Schiebekeil 11 sind der Einfachheit halber nicht dargestellt. Eine Kulisse 15 verhindert ein unbeabsichtigtes Hinausschieben des Schiebekeiles 11 während des Maschinenumlaufs.

Das Vertikalführungselement 8 besitzt einen Hohlraum 16 und an dessen oberem Ende eine im Horizontalschnitt quadratische Öffnung 17, in die unter Belassung eines entsprechenden Radialspiels eine komplementär geformte Gewindebuchse 18 so eingesetzt ist, daß ihr oberer Rand 19 schwimmend auf der oberen Stirnfläche des Vertikalführungselements 8 aufliegt. Die Außenfläche des Vertikalführungselements 8 und die Innenfläche der Lagerbüchse 7 sind Zylinderflächen.

Auf der Gewindebuchse 18 ruht wiederum ein zweites Vertikalführungselement 20 mit einer äußeren Zylinderfläche 21, einer zylindrischen Bohrung 22 und einer Gewindebohrung 23, in die ein Gewindezapfen 24 eingesetzt ist. Dieser Gewindezapfen durchdringt mittels eines entsprechenden Gegengewindes auch die Gewindebuchse 18. Das obere Ende des Gewindezapfens 24 ist mittels eines nicht näher bezeichneten diametralen Kerbstiftes in einen Pegel 25 eingesetzt, dessen unteres Ende zylindrisch geformt und dreh- und längsbeweglich in die zylindrische Bohrung 22 des Vertikalführungselements 20 eingesetzt ist. Mittels des Gewindezapfens 24 lassen sich die Gewindebuchse 18 und das zweite Vertikalführungselement 20 gegeneinander verspannen. Solange die Gewindeverbindung durch eine Linksdrehung des Vertikalführungselements 20 gelöst ist, läßt sich der Pegel 25 unter Mitnahme des Gewindezapfens 24 nach oben oder unten verstellen. Zu diesem Zweck besitzt der Pegel 25 unterhalb seiner Arbeitsfläche 26 eine Angriffsfläche 27 für einen Schraubenschlüssel oder dergleichen. Sobald der Pegel 25 die vorgeschriebene Höhenlage einnimmt, läßt sich die Gewindeverbindung durch eine Rechtsdrehung des Vertikalführungselements 20 verspannen bzw. kontern. Zu diesem Zweck besitzt das Vertikalführungselement 20 an seinem oberen Ende Angriffsflächen 28, die gleichfalls für den Eingriff eines Schraubenschlüssels bzw. Einstellwerkzeugs vorgesehen sind.

- 12 -

Der Maschinentisch 4 besitzt in seiner oberen Begrenzungsfläche 5 eine Ausnehmung 29, in die ein komplementärer Fortsatz 30 einer Bodenplatte 31 eingreift, die die auswechselbare Glasform 3 trägt. Diese Glasform ist im vorliegenden Falle zweiteilig ausgebildet und in einem gleichfalls zweiteiligen Formenhalter 32 befestigt, von dem hier nur die hintere Hälfte sichtbar ist. Zum Formenhalter gehören Scharnierteile 33 und 34, die abwechselnd je einer Hälfte des Formenhalters 32 zugeordnet sind. Die Scharnierteile sind auf einer Lagerbüchse 35 aufgereiht, die ihrerseits wieder auf einen Scharnierbolzen 36 aufgeschoben ist.

Um die Glasform 3 exakt gegenüber dem Pegel 25 zentrieren zu können, besitzt die Bodenplatte 31 eine Zentriereinrichtung 37, die als hohlzylindrischer Fortsatz über die Bodenplatte hinausragt und an der Obergangsstelle zur Bodenplatte eine Ringnut 38 mit einer Kegelfläche 39 aufweist. Die Teile des Formenhalters 32 sind im Bereich ihrer Unterkante komplementär zu dem zugehörigen Umfangsteil der Ringnut 38 mit der Kegelfläche 39 ausgebildet, so daß sich beim Schliessen des Formenhalters 32 eine exakte Zentrierung gegenüber der Formenachse A-A einstellt. Der Scharnierbolzen 36 ist mittels eines angeformten Zylinderstücks 40 in eine entsprechende Bohrung 41 in der Bodenplatte 31 eingesetzt.

- 13 -

In der Bodenplatte 31 bzw. in der Zentriereinrichtung 37 befindet sich eine zylindrische Bohrung 42, die die Lagerbohrung für das Vertikalführungselement 20 darstellt. Durch diese Vertikalführung läßt sich der Pegel 25 mit seiner Längsachse exakt in der Formenachse A-A mittels des Schiebekeils 11 verschieben. Aus Figur 1 ergibt sich der außerordentlich gedrungene und in axialer Richtung kurze Aufbau der beiden Vertikalführungselemente 8 und 20, die dennoch unabhängig voneinander durch die ihnen jeweils zugeordnete Lagerbüchse 7 bzw. die Bohrung 42 geführt werden. Nach dem Öffnen des Formenhalters 32 sind die Angriffsflächen 27 und 28 für die Einstellwerkzeuge zugänglich, so daß eine entsprechende Justierung des Pegels 25 auf die weiter oben beschriebene Weise möglich ist. Andererseits läßt sich die Bodenplatte 31 zusammen mit dem Formenhalter 32 und der Glasform 3 nach Lösen hier nicht gezeigter Befestigungsschrauben entfernen, und auch der Austausch der Glasform gegen eine andere Glasform ist auf diese Weise möglich. Nach dem Abnehmen des Formenhalters 32 läßt sich auch der Pegel 25 mit dem Vertikalführungselement 20 und der Gewindebuchse 18 nach oben herausnehmen, so daß auf diese Weise gleichfalls ein leichter Austausch möglich ist.

Zur Schmierung der Vertikalführungselemente 8 und 20 ist die Lagerbüchse 7 mit einem Schmiermittelanschluß 43 ausgestattet, der ersichtlich gleichfalls unterhalb des Maschinentisches 4 liegt. Die Schmiermittelverteilung erfolgt über ein in der Zeichnung gezeigtes, aber nicht im einzelnen beziffertes Bohrungssystem.

Die aus der Vorrichtung nach Figur 1 kommenden Stiele können beispielsweise durch eine Vorrichtung zum Feuerpolieren und über ein Kühlband zu einem Magazin geführt werden, wo sie für die weitere Verarbeitung vorrätig gehalten werden. Es versteht sich, daß alsdann beim späteren Verbinden mit einem Kelch die Ansetzfläche wieder auf die erforderliche Verbindungstemperatur gebracht werden muß, bei der das Glas in plastischem Zustand vorliegt.

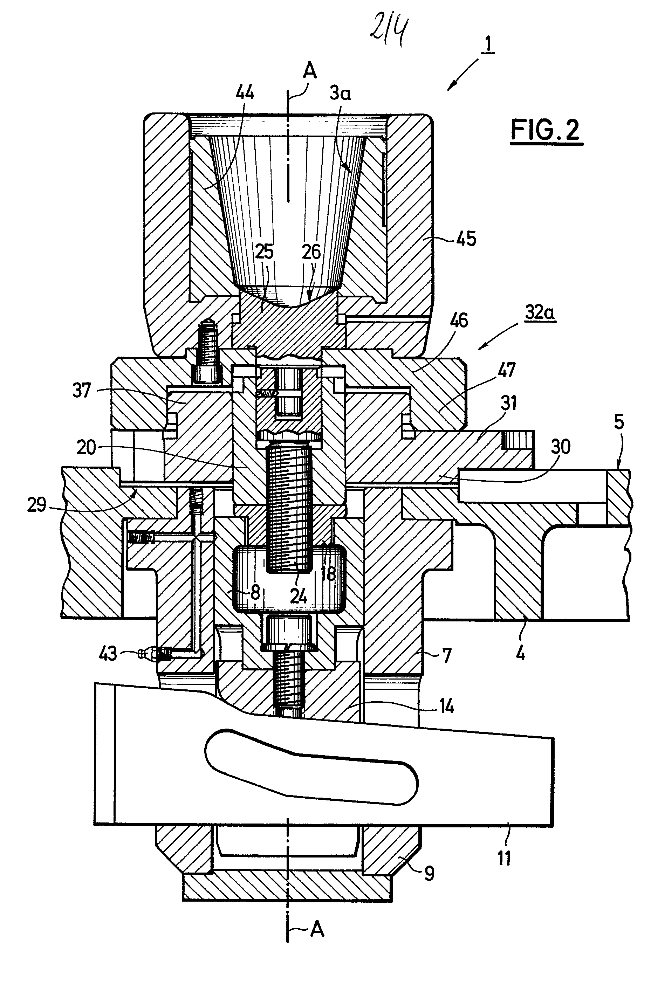

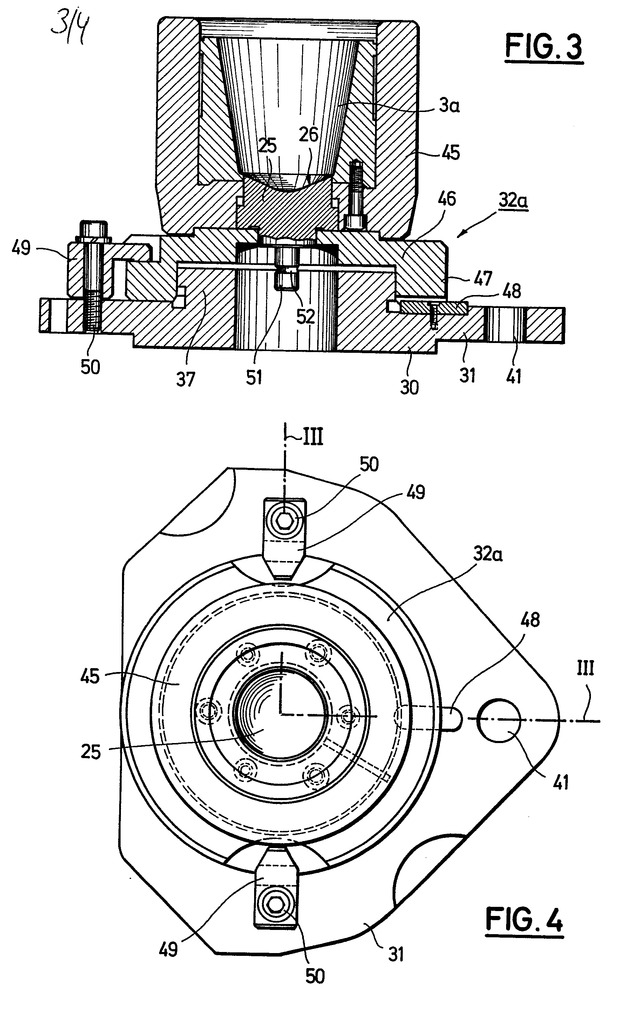

In Figur 2 ist eine einteilige Glasform 3a für die Herstellung von Kelchen dargestellt, bei der entsprechende Formsegmente 44 in einen einteiligen rotationssymmetrischen Formenmantel 45 eingesetzt sind. Entsprechend einfach ist der Formenhalter 32a gestaltet, der im wesentlichen aus einer Ringscheibe 46 und einem nach unten weisenden Auflagerand 47 besteht. Dieser Auflagerand übergreift die Zentriereinrichtung 37, um auf diese Weise eine absolut konzentrische Ausrichtung der Formenachse A-A gegenüber den Längsachsen aller Vertikalführungselemente herzustellen, die zumindest mit ihren Außenflächen reine Rotationskörper sind. Die Befestigung des Formenhalters 32a auf der Bodenplatte 31 wird anhand der Figuren 3 und 4 noch näher erläutert.

- 15 -

Der Pegel 25 hat bei dem Ausführungsbeispiel gemäß Figur 2 einen etwas größeren Querschnitt und eine anders geformte Arbeitsfläche 26, stimmt jedoch hinsichtlich seiner Wirkungsweise mit derjenigen des Pegels 25 in Figur 1 überein. Auch ist bei dem Ausführungsbeispiel gemäß Figur 2 der Pegel in der dargestellten Weise über eine federbelastete Rastverbindung mit einem Fortsatz des Gewindezapfens 24 verbunden. Hinsichtlich der übrigen Führungs- und Antriebselemente ist Übereinstimmung mit Figur 1 gegeben, so daß zum Zwecke der Vermeidung einer Wiederholung für die wesentlichsten Vorrichtungsteile auch identische Bezugszeichen verwendet wurden. Insbesondere anhand von Figur 2 kann dargelegt werden, daß die erfindungsgemäße Vorrichtung auch ohne Verwendung eines besonderen Formtisches universell umgerüstet werden kann.

Figur 3 zeigt die Befestigung des Formenhalters 32 mit der Glasform 3a auf der Bodenplatte 31. Um eine Drehung des Formenhalters 32a gegenüber der Bodenplatte 31 zu verhindern, ist diese mit einer radialen Passfeder 48 versehen. Die Befestigung des Formenhalters 32a erfolgt über zwei diametral angeordnete Spannpratzen 49, die über Zugschrauben 50 gegen die Bodenplatte 31 bzw. den Formenhalter 32a verspannt werden. Gemäß Figur 4 verläuft die in Figur 3 dargestellte Schnittfläche entlang der Linie III-III.

Figur 3 ist noch zu entnehmen, daß der Pegel 25 an seiner Unterseite mit einem Zapfen 51 versehen ist, der eine Umfangsnut 52 aufweist, mittels welcher der Pegel in eine Verlängerung des Gewindezapfens 24 eingerastet werden kann (Figur 2).

Oberhalb einer jeden Glasform 3 bzw. 3a befinden sich je ein bekannter Preßstempel für die Umformung einer Glascharge in einen Stiel oder Kelch.

Die aus der Vorrichtung nach den Figuren 2 oder 3 kommenden Kelche können unmittelbar und gegebenenfalls nach dem Feuerpolieren einer weiteren Vorrichtung zugeführt werden, in der sie entweder mit aus dem Magazin kommenden oder unmittelbar von einer anderen Preßmaschine kommenden Stielen auf herkömmliche Art vereinigt werden.

In den Figuren 5 und 6 ist eine Glasformmaschine in der Seitenansicht und in der Draufsicht dargestellt, die erfindungsgemäß ausgebildet ist. Der Maschinentisch 4 ist mit insgesamt 16 Arbeitsstationen 1 ausgestattet, von denen jede die Einzelteile gemäß Figur 1 besitzt, d.h. eine Glasform 3 mit einem Formenhalter 32, der mit Scharnierteilen 33 und 34 ausgestattet ist. Es ist aber auch möglich, den Maschinentisch 4 entsprechend den zeichnerischen Darstellungen in den Figuren 2 bis 4 zu bestücken.

Der Maschinentisch 4 ruht unter Zwischenschaltung eines intermittierenden Drehantriebs 53 auf einem fahrbaren Maschinengestell 54, an dem auch eine

- 17 -

Klemmstation 55, ein Pressenzylinder 56 mit einer Hubmeßeinrichtung 57 und ein Federkorb 58 befestigt sind.
Eine Abstützung der Bauteile erfolgt über eine zentrale
Säule 59 und eine radiale Traverse 60.

Auf der gegenüberliegenden Seite befindet sich der Hubantrieb 61, der aus einem Hubzylinder 62 und dem bereits
beschriebenen Schiebekeil 11 besteht, der von dem Hubzylinder 62 über eine nicht näher bezeichnete Kolbenstange und einen Mitnehmer 63 antreibbar ist.

Der Anordnung ist weiterhin eine Entnahmestation 64 zugeordnet, die an einem Ausleger 65 aufgehängt ist. Jedem
Formenhalter 32, sofern er gemäß Figur 1 mit Scharnierteilen 33 und 24 versehen ist, ist ein Schließantrieb 66
zugeordnet, der gleichfalls auf dem Maschinentisch 4 befestigt ist. Figur 6 zeigt einen zweiteiligen Formenhalter 32 in geöffnetem Zustand. Einzelheiten des
Pressenzylinders bzw. der Preßstation und der Entnahmestation sind jedoch Stand der Technik, so daß sich ein
weiteres Eingehen hierauf erübrigt.

Es ist Figur 5 jedoch zu entnehmen, daß die erfindungsgemäße Glasformmaschine oberhalb des Maschinentisches 4 einen beträchtlichen Freiraum aufweist, der
nicht durch die bisher üblichen Formentische versperrt ist.

P A T E N T A N S P R Ü C H E :

1. Formmaschine für Preßglasteile mit einer Ansetzfläche für ein weiteres Glasteil, insbesondere für Kelche und Stiele, mit einem drehbaren Maschinentisch (4), mit mehreren Arbeitsstationen mit je einer Bodenplatte (31) mit mindestens einer Zentriereinrichtung (37) für eine auswechselbar aufsetzbare Glasform (3, 3a) mit je einem mit dem Maschinentisch umlaufenden Hubantrieb (61) für einen mit der Glasform zusammenwirkenden die Ansetzfläche formenden und nach dem Formvorgang geringfügig absenkbaren Pegel (25), mit einem ersten, zusammen mit dem Hubantrieb im Maschinentisch gelagerten Vertikalführungselement (8) für den Hubantrieb sowie mit einem darüberliegenden zweiten, in der Bodenplatte (31) gelagerten Vertikalführungselement (20) für den Pegel sowie schließlich mit einer Verstelleinrichtung (23/24) für die Einstellung des vertikalen Abstandes zwischen Pegel und Hubantrieb, dadurch gekennzeichnet, daß das erste Vertikalführungselement (8) auf seiner ganzen Länge unterhalb einer oberen Begrenzungsfläche (5) des Maschinentisches (4) in diesem angeordnet ist und daß die Bodenplatte (31) mit dem zweiten Vertikalführungselement (20) unmittelbar auf den Maschinentisch aufgesetzt ist.

2. Formmaschine nach Anspruch 1, dadurch gekennzeichnet, daß das erste (8) und das zweite Vertikalführungselement (20) unter Zwischenschaltung einer gegenüber dem ersten Vertikalführungselement (8) unverdrehbaren Gewindebuchse (18) im Bereich des Maschinentisches (4) aufeinandergesetzt sind, und daß ein mit dem Pegel (25) drehfest verbundener aber gegenüber dem zweiten Vertikalführungselement (20) in einer Gewindebohrung (23) drehbarer Gewindezapfen (24) in die Gewindebuchse (18) eingreift, derart, daß das zweite Vertikalführungselement (20) die Kontermutter für die Gewindebuchse (18) ist.

3. Formmaschine nach Anspruch 2, dadurch gekennzeichnet, daß der Pegel (25) und das zweite Vertikalführungselement (20) unterhalb der Arbeitsfläche (26) des Pegels mit Angriffsflächen (27, 28) für Einstellwerkzeuge versehen sind.

4. Formmaschine nach Anspruch 2, dadurch gekennzeichnet, daß die Gewindebuchse (18) mit Radialspiel in das erste Führungselement (8) eingesetzt ist.

5. Formmaschine nach Anspruch 1, dadurch gekennzeichnet, daß die Bodenplatte (31) für die Glasform (3) an der Unterseite einen zur Formachse A-A konzentrischen Fortsatz (30) und der Maschinentisch (4) eine zum Fortsatz komplementäre Ausnehmung (29) besitzt.

- 20 -

6. Formmaschine nach Anspruch 1, <u>dadurch gekennzeichnet</u>, daß das erste Vertikalführungselement (8) in einer Lagerbüchse (7) gelagert ist, deren obere Stirnfläche höchstens in der oberen Begrenzungsfläche (5) des Maschinentisches (4) liegt.

7. Formmaschine nach Anspruch 6, <u>dadurch gekennzeichnet</u>, daß die Lagerbüchse (7) für das erste Vertikalführungselement (8) von unten an den Maschinentisch (4) angesetzt ist und daß die zugehörige Bodenplatte (31) mit dem zweiten Vertikalführungselement (20) koaxial von oben an den Maschinentisch (4) angesetzt ist.

8. Formmaschine nach Anspruch 6, <u>dadurch gekennzeichnet</u>, daß ein Schmiermittelanschluß (43) für die Lagerbüchse (7) unterhalb des Maschinentisches (4) liegt.

9. Formmaschine nach Anspruch 1, <u>dadurch gekennzeichnet</u>, daß bei einer geteilten Glasform (3) der Schließantrieb für die Glasform gleichfalls unmittelbar auf dem Maschinentisch (4) angeordnet ist.

1/4

**FIG.1**

2/4

FIG.2

0 171 020

3/4

FIG.3

FIG.4

4/4

## FIG. 5

## FIG. 6

0 171 020

EUROPÄISCHER RECHERCHENBERICHT

EP 85 10 9540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US-A-3 520 671  (LEMETRE) <br> * insgesamt * <br><br> --- | 1 | C 03 B 11/02 |
| A | GB-A-2 019 382  (PUTSCH) <br> * insgesamt * <br><br> ----- | 1 | |
| | | | **RECHERCHIERTE SACHGEBIETE (Int. Cl.4)** <br><br> C 03 B 11/00 |

Der vorliegende Recherchenbericht wurde für alle Patentansprüche erstellt.

| Recherchenort <br> DEN HAAG | Abschlußdatum der Recherche <br> 01-10-1985 | Prüfer <br> VAN DEN BOSSCHE W.L. |
|---|---|---|